(19) Europäisches Patentamt

European Patent Office

Office européen des brevets

(11) EP 2 725 339 A2

(12) EUROPEAN PATENT APPLICATION

(43) Date of publication:
30.04.2014 Bulletin 2014/18

(51) Int Cl.:
*G01N 15/06* (2006.01)

(21) Application number: 12199713.4

(22) Date of filing: 28.12.2012

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 25.10.2012 KR 20120119183

(71) Applicants:
• **HYUNDAI MOTOR COMPANY
Seoul (KR)**
• **KIA Motors Corporation
Seoul (KR)**
• **SNU R&DB Foundation
Seoul 151-742 (KR)**

(72) Inventors:
• LEE, Jin Ha
Seoul (KR)
• LIM, Sera
Mokpo-si (KR)
• JANG, Keunho
Yongin-si (KR)
• CHUN, Kukjin
Seoul (KR)
• JEONG, Jin-woo
Busan (KR)

(74) Representative: **Viering, Jentschura & Partner
Patent- und Rechtsanwälte
Grillparzerstrasse 14
81675 München (DE)**

(54) **Particulate matter sensor unit**

(57)    A particulate sensor apparatus may include an exhaust line through which exhaust gas flows, and a sensor that may be disposed at one side in the exhaust line and generates electrical charges when a particulate passes near vicinity of the sensor, wherein an electrode portion may be formed on a front surface of the sensor facing the particulate.

FIG.2

EP 2 725 339 A2

**(Cont. next page)**

# FIG.5

Description

CROSS-REFERENCE TO RELATED APPLICATION

The present application claims priority to Korean Patent Application No. 10-2012-0119183 filed on October 25, 2012, the entire contents of which is incorporated herein for all purposes by this reference.

BACKGROUND OF THE INVENTION

Field of the Invention

The present invention relates to a particulate sensor unit that accurately and effectively detects damage to a particulate filter filtering particulate matter (PM) included in exhaust gas, and transmits the detected signal to a control portion.

Description of Related Art

A diesel particulate filter (DPF) has been being applied to a diesel vehicle so as to reduce PM thereof, and a pressure difference sensor is applied to detect a PM amount that is trapped in the diesel particulate filter.
In the future, a pressure difference sensor will not be used to detect damage to the DPF according to exhaust gas regulations, and further, the detection precision of the pressure difference sensor is low.
The information disclosed in this Background of the Invention section is only for enhancement of understanding of the general background of the invention and should not be taken as an acknowledgement or any form of suggestion that this information forms the prior art already known to a person skilled in the art.

BRIEF SUMMARY

Various aspects of the present invention are directed to providing a particulate sensor unit having advantages of accurately detecting an amount of PM (particulate matter) that is slipped from a particulate filter and accurately detecting damage to the particulate filter through the detected PM amount.
In an aspect of the present invention, a particulate sensor apparatus may include an exhaust line through which exhaust gas flows, and a sensor that is disposed at one side in the exhaust line and generates electrical charges when a particulate passes near vicinity of the sensor, wherein an electrode portion is formed on a front surface of the sensor facing the particulate.
A groove is formed between electrode portions in a direction that crosses a direction that the exhaust gas flows.
The electrode portions are formed perpendicular to a direction that the exhaust gas flows.
A cross section of the electrode portion is in a rectangular shape.
A slanted surface is formed to a lateral side of the electrode portions from an upper end surface thereof to the groove.
The slanted surface forms an angle ranging from 50 to 60 degrees with respect to the upper end surface of the electrode portions.
A cross section of the electrode portion is in a trapezoidal shape formed with the slanted surface.
A cross section of the electrode portion is in a triangular shape formed with the slanted surface.
The electrode portion is in a pillar shape that protrudes at the front surface of the sensor in the pillar shape.
The electrode portion may have a width of the electrode portion that is 20 nm, a distance from an adjacent electrode portion that ranges from 20 to 120 nm, and a height thereof that ranges from 20 nm to hundreds of nanometers.
A slanted surface is formed on lateral sides of the protrude portion to become wider from an upper end surface thereof to the front surface.
A cross-section of the electrode portion may have a trapezoidal shape.
A cross section of the electrode portion is in a triangular shape.
The electrode portion protrudes in the pillar shape, and an exterior diameter thereof is less than 10 nm to be a nano-wire shape.
The electrode portion is formed with pores that are sunken in a pillar shape.
The pores may have a cuboidal shape.
The pores may have a trapezoidal shape to become narrower from an upper surface thereof to a lower surface thereof.
A diesel particulate filter (DPF) is disposed at an upstream side of the sensor, the sensor generates the electrical charge that is induced by the particulate may include d in the exhaust gas, and a control portion determines whether the diesel particulate filter is damaged or not depending on the electrical charge of the sensor.

The methods and apparatuses of the present invention have other features and advantages which will be apparent from or are set forth in more detail in the accompanying drawings, which are incorporated herein, and the following Detailed Description, which together serve to explain certain principles of the present invention.

## BRIEF DESCRIPTION OF THE DRAWINGS

FIG. 1 is a graph showing a particulate material amount that is trapped in a diesel particulate filter according to an exemplary embodiment of the present invention.

FIG. 2 is an interior perspective view showing a condition that a particulate sensor is disposed in an exhaust line according to an exemplary embodiment of the present invention.

FIG. 3 is a graph showing a charge amount that is generated by a sensor unit depending on distance variation between a sensor and particulate matter according to an exemplary embodiment of the present invention.

FIG. 4 is a perspective view showing a front side of a particulate sensor according to an exemplary embodiment of the present invention.

FIG. 5 is a perspective view showing a rear side of a particulate sensor according to an exemplary embodiment of the present invention.

FIG. 6 is a side view showing exhaust gas flow around a particulate sensor and the surroundings thereof according to an exemplary embodiment of the present invention.

FIG. 7 is a partial detailed cross-sectional side view of a surface of a particulate sensor according to an exemplary embodiment of the present invention.

FIG. 8 is a perspective view showing a surface shape of a particulate sensor according to an exemplary embodiment of the present invention.

FIG. 9 is a graph showing an equipotential line depending on a ratio between a groove and a protrusion that are formed on a surface of a particulate sensor according to an exemplary embodiment of the present invention.

FIG. 10 (a), (b), and (c) are perspective views showing a groove type that is formed on a surface of a particulate sensor according to an exemplary embodiment of the present invention.

FIG. 11 (a), (b), and (c) are perspective views showing different types of grooves that are formed on a surface of a particulate sensor according to an exemplary embodiment of the present invention.

FIG. 12 is a graph showing signals depending on types of grooves that are formed on a surface of a particulate sensor according to an exemplary embodiment of the present invention.

FIG. 13 is a schematic diagram of an exhaust system in which a sensor is disposed according to an exemplary embodiment of the present invention.

FIG. 14 is a perspective view showing various types of surfaces of a particulate sensor according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

## DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

An exemplary embodiment of the present invention will hereinafter be described in detail with reference to the accompanying drawings.

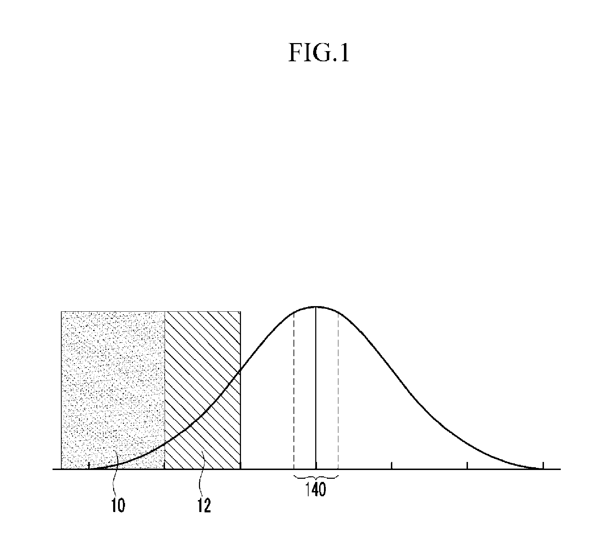

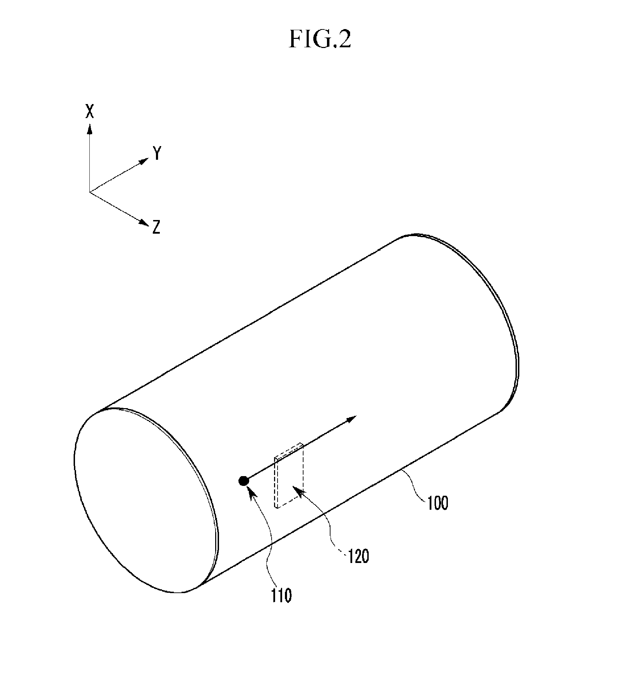

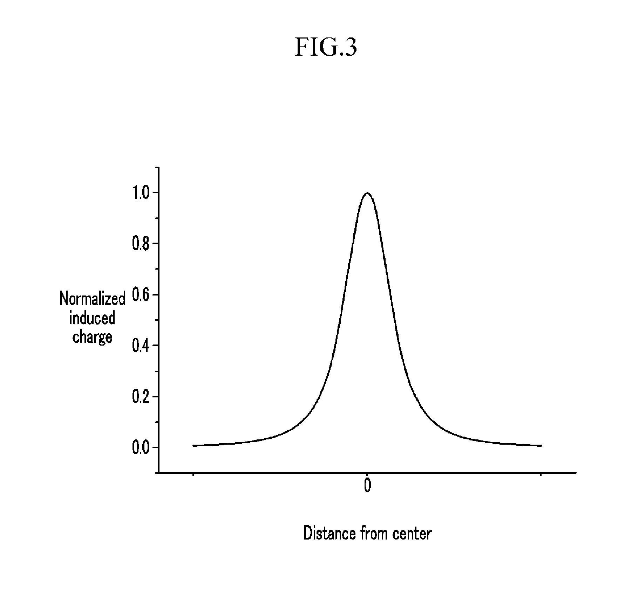

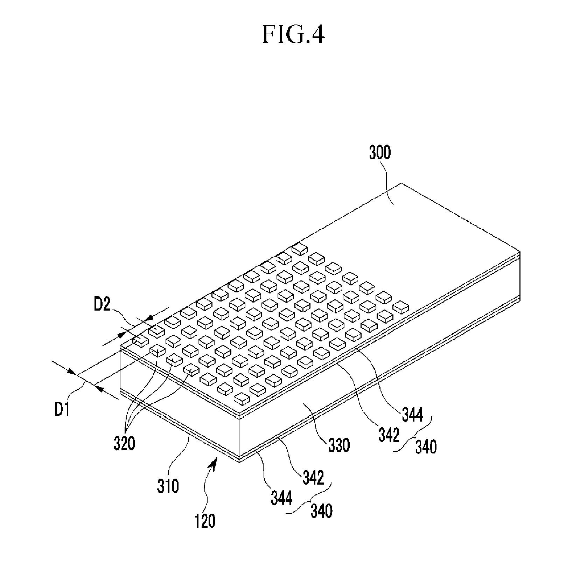

FIG. 1 is a graph showing a particulate material amount that is trapped in a diesel particulate filter according to an exemplary embodiment of the present invention, FIG. 2 is an interior perspective view showing a condition that a particulate sensor is disposed in an exhaust line according to an exemplary embodiment of the present invention, FIG. 3 is a graph showing a charge amount that is generated by a sensor unit depending on distance variation between a sensor and particulate matter according to an exemplary embodiment of the present invention, and FIG. 4 is a perspective view showing a front side of a particulate sensor according to an exemplary embodiment of the present invention.

Referring to FIG. 1, a horizontal axis denotes a size of pressure difference, and a vertical axis denotes a trapping efficiency.

A first area 140 denotes a pressure difference area of a sensor unit that is being gradually strengthened, and a second area 12 denotes an area where trapping efficiency of a diesel particulate filter is less than 50 % to be detected by a general pressure difference sensor. Further, a third area 10 is an area in which the trapping efficiency is almost 0, which is caused by damage to the diesel particulate filter.

As shown in the drawings, sensitivity of a general pressure difference sensor is low and a detecting area is narrow, and therefore a new type of pressure difference sensor or particulate sensor is necessary.

Referring to FIG. 2 and FIG. 4, exhaust gas flows in an exhaust line 100, and particulate 110 is included in the exhaust gas.

The particulate 110 nearby passes the sensor (120, particulate sensor) and the sensor 120 generates a signal during the passing of the particulate 110.

An electric charge of the particulate matter generates a signal in the sensor 120.

Generally, an electric field that is generated by the charged particle is shown as in the following equation. $\vec{E} = \dfrac{Q}{4\pi\varepsilon_0 r^2}\vec{a}_r$ *Electric field that is generated by a charged particle.

The Q is a charge amount that the charged particle has, and the r is a distance to the charged particle.

Also, $\varepsilon_0$ is a dielectric constant in a vacuum condition.

A surface electric charge equal to the electric field that is formed by the charged particle matter is formed on the sensor electrode interface. The induced charge is calculated by Laplace's equation. On a conductor plane plate that is disposed on a plane surface of which Z is 0 as a rectangular coordinate, when an electric charge having a charge amount Q is disposed on (0,0,d) coordinates, a potential and a surface electric charge density that are induced by a point electric charge is as shown as the following equation.

$$V(x, y, z) = \frac{Q}{4\pi\varepsilon_0}\left[ \frac{1}{\sqrt{x^2 + y^2 + (z-d)^2}} - \frac{1}{\sqrt{x^2 + y^2 + (z+d)^2}} \right]$$

A potential that is generated by a point electric charge

$$\vec{E} = -\nabla V$$

$$= \frac{Q}{4\pi\varepsilon_0}\left[ \frac{x\cdot\vec{a}_x + y\cdot\vec{a}_y + (z-d)\cdot\vec{a}_z}{\left(x^2 + y^2 + (z-d)^2\right)^{3/2}} - \frac{x\cdot\vec{a}_x + y\cdot\vec{a}_y + (z+d)\cdot\vec{a}_z}{\left(x^2 + y^2 + (z+d)^2\right)^{3/2}} \right]$$

An electric field that is generated by a point electric charge

$$\rho_s = \varepsilon_0 E_z\big|_{z=0} = -\frac{Qd}{2\pi(x^2 + y^2 + d^2)^{3/2}}$$

A surface electric charge density that is induced $\vec{a}_x$, $\vec{a}_y$, $\vec{a}_z$ denote unit vectors of axis X, axis Y, and axis Z in rectangular coordinates.

If the induced charge amount that is formed on a sensing electrode by the charged particle is displayed along axis X, a positive signal is formed as in the below graph according to a distance between the charged particle and the electrode.

FIG. 3 is a graph of a charge signal that is induced according to a distance X between a sensor and a particulate.

Referring to FIG. 4, the sensor 120 includes a silicon electrode layer 330 and an insulating layer 340.

The silicone electrode layer 330 is formed in a central portion to have a predetermined thickness, and the insulating layer 340 is formed on a front surface 300 and a rear surface 310 of the silicone electrode layer 330.

The insulating layer 340 includes an oxide layer 342 that is formed on the silicone electrode layer 330, and a nitride layer 344 that is formed on the oxide layer 342.

Electrode portions 320 that are protruded are formed on a front surface 300 of the sensor 120, wherein the electrode portions 320 are positioned at a first distance D1 in a width direction and a second distance D2 in a length direction from each other.

The first distance D1 and the second distance D2 can be varied depending on the design specifications. Further, the height of each electrode portion 320 can be varied depending on the design specifications.

In an exemplary embodiment of the present invention, the electrode portion 320 that is formed on the front side of the sensor can have various kinds of shapes that can be selected from a part of at least one of a cuboid, a regular hexahedron, a sphere, a triangular pyramid, a quadrangular pyramid, and a cone.

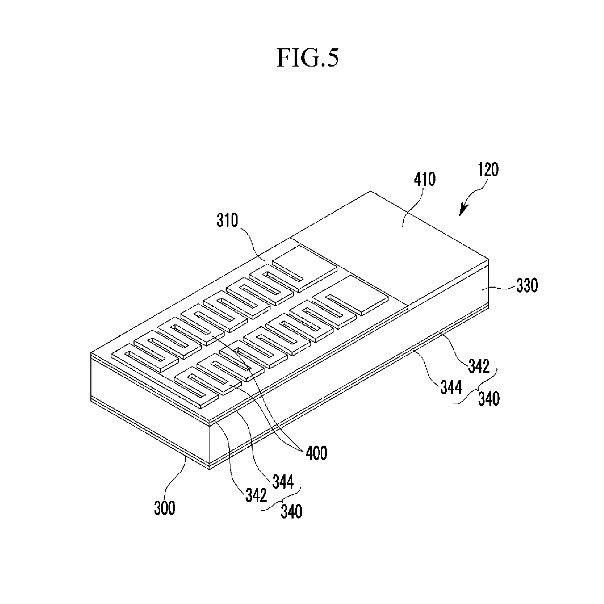

Referring to FIG. 5, the rear surface 310 of the sensor 120 will be detailed.

FIG. 5 is a perspective view showing a rear side of a particulate sensor according to an exemplary embodiment of the present invention.

Referring to FIG. 5, the insulating layer 340 is formed at one side of a rear surface of the sensor 120, and the insulating layer 340 is not formed at the other side thereof.

A heater electrode 400 is formed on the insulating layer 340, and as shown, the heater electrode 400 includes a part having a zigzag shape.

A sensing electrode pad 410 is formed on a part where the insulating layer 340 is not formed, and is electrically connected to the silicone electrode layer 330.

In an exemplary embodiment of the present invention, the silicone electrode layer 330 includes a Si component similar to a silicone wafer, and the heater electrode 400 and the sensing electrode pad 410 include platinum (Pt) that transfers electricity well and that has high durability.

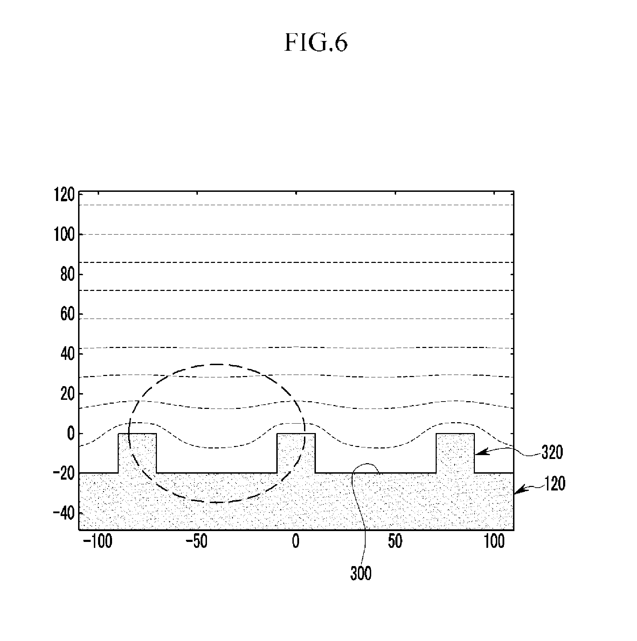

FIG. 6 is a side view showing exhaust gas flow around a particulate sensor and the surroundings thereof according to an exemplary embodiment of the present invention.

Referring to FIG. 6, the electrode portion 320 protrudes on the front surface 300 of the sensor 120 in a flow direction of exhaust gas by a predetermined distance, and an equipotential line is formed along a groove between electrode portions 320.

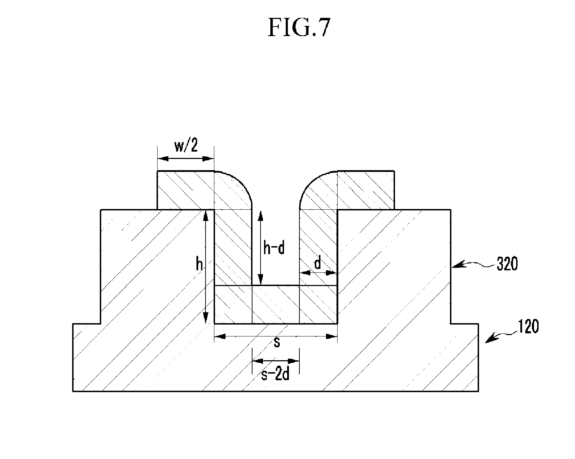

FIG. 7 is a partial detailed cross-sectional side view of a surface of a particulate sensor according to an exemplary embodiment of the present invention. Referring to FIG. 7, a section of an electrode portion having a furrow shape is shown.

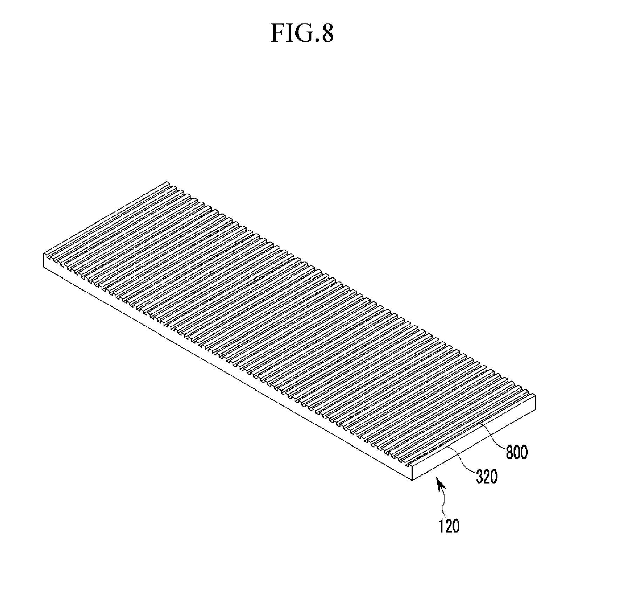

FIG. 8 is a perspective view showing a surface shape of a particulate sensor according to an exemplary embodiment of the present invention. Referring to FIG. 8, grooves 800 are formed on the sensor 120 in a vertical direction with respect to the length direction thereof, and the grooves 800 are arranged in the length direction at a predetermined distance. Also, an electrode portion 320 is formed between the grooves 800.

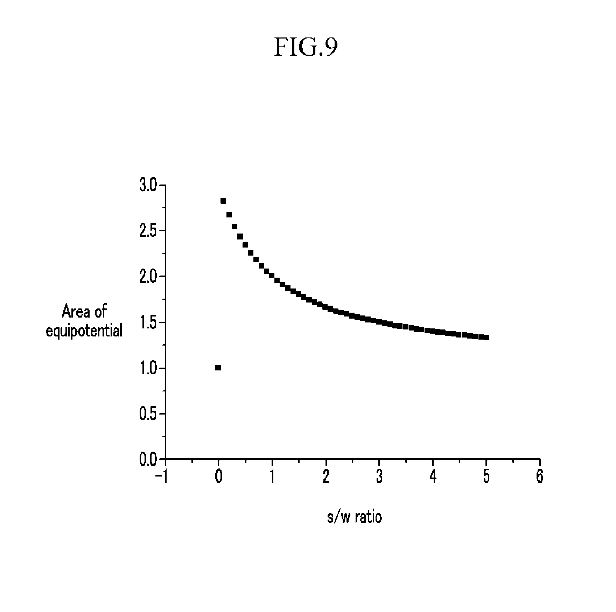

FIG. 9 is a graph showing an equipotential line depending on a ratio between a groove and a protrusion that are formed on a surface of a particulate sensor according to an exemplary embodiment of the present invention.

Referring to FIG. 9, a horizontal axis denotes a ratio between a width (W) of the electrode portion 320 and a width (S) of a groove, and a vertical axis denotes a size of an equipotential area.

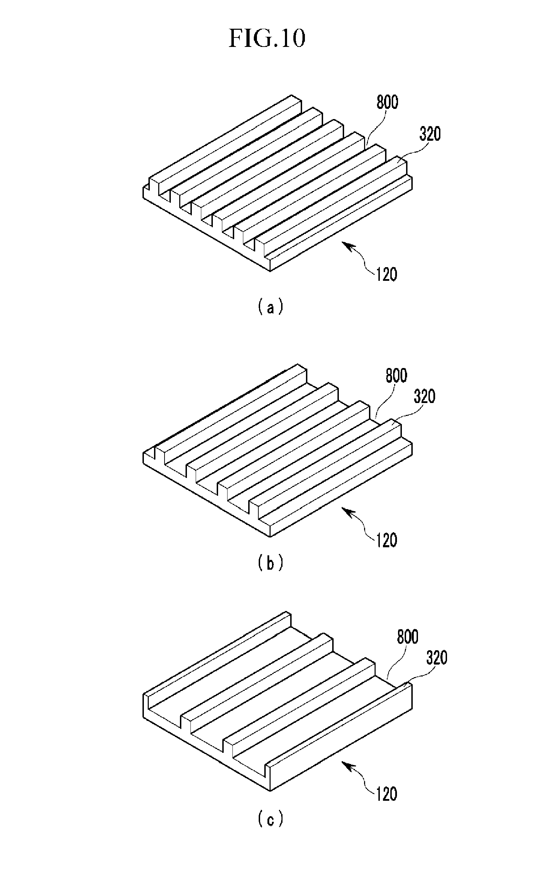

FIG. 10 (a), (b), and (c) are perspective views showing a groove type that is formed on a surface of a particulate sensor according to an exemplary embodiment of the present invention.

Referring to FIG. 10 (a), (b), and (c), electrode portions 320 are formed on a front surface of the sensor 120 in a vertical direction with respect to the flow direction of the exhaust gas, and grooves 800 are formed between the electrode portions 320.

Further, the width and height of the electrode portions 320 are 20 $\mu$m and the width between the electrode portions 320 is 20 $\mu$m in (a), 40 $\mu$m in (b), and 60 $\mu$m in (c).

That is, the width of the grooves 800 is 20 $\mu$m in (a), 40 $\mu$m in (b), and 60 $\mu$m in (c).

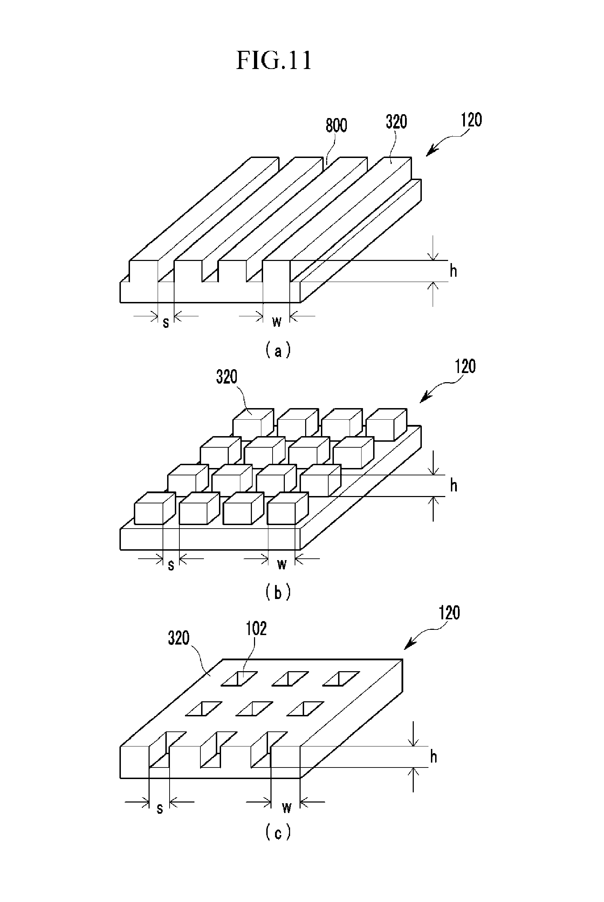

FIG. 11 (a), (b), and (c) are perspective views showing different types of grooves are that is formed on a surface of a particulate sensor according to an exemplary embodiment of the present invention.

Referring to FIG. 11 (a), electrode portions 320 having a width (w), a distance (s), and a height (h) are shown.

Here, electrode portions 320 that are formed on a front side of the sensor 120 are continuously formed in a vertical direction with respect to the flow direction of the exhaust gas to be a furrow type. Here, a width (W) and a height (h) are 20 $\mu$m, and a distance (s) can be one of 20, 40, and 60 $\mu$m.

Referring to FIG. 11 (b), electrode portions 320 having a predetermined width (w), distance (s), and height (h) are shown.

Each electrode portion 320 that is formed on a front surface of the sensor 120 is a pillar type. Here, the width (W) and the height (h) are set to 20 $\mu$m, and the distance (s) can be set to one of 20, 40, and 60 $\mu$m.

Referring to FIG. 11 (c), an electrode portion 320 having a predetermined width (w), distance (s), and height (h) is shown.

Each electrode portion 320 that is formed on a front side of the sensor 120 is a pore type in which the pores 102 are sunken in a pillar type.

The width (W) and the height (h) are set to 20 $\mu$m, and the distance (s) can be set to one of 20, 40, and 60 $\mu$m.

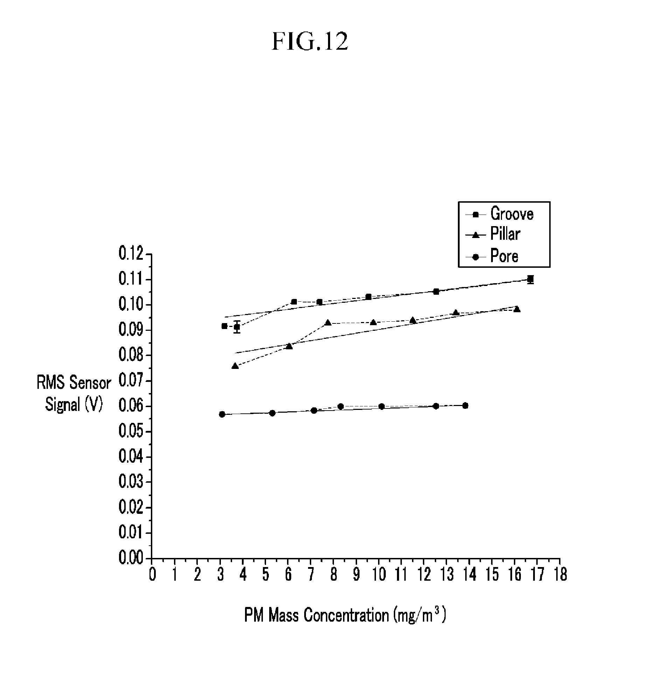

FIG. 12 is a graph showing a signal depending on types of grooves that are formed on a surface of a particulate sensor according to an exemplary embodiment of the present invention.

Referring to FIG. 12, a horizontal axis denotes a density (mg/m3) of particulate, and a vertical axis denotes a size of a signal that is generated depending on the type of sensor.

Here, the types of sensors 120 include a furrow type, a pillar type, and a pore type that are described in FIG. 11. As shown, the signal is large and meaningful for the furrow type.

Further, the width (W) and the distance (s) can be 10 $\mu$m, and the height (h) can be 40 $\mu$m.

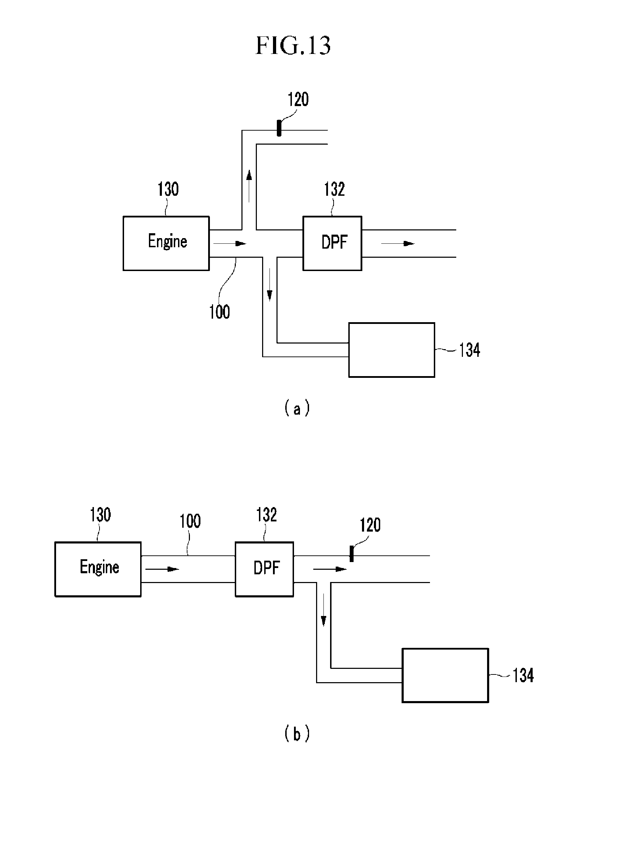

FIG. 13 is a schematic diagram of an exhaust system in which a sensor is disposed according to an exemplary embodiment of the present invention.

Referring to FIG. 13 (a) and (b), the exhaust system includes an engine 130, an exhaust line 100, a diesel particulate filter 132, a sensor 120, and a gas analyzer 134.

In FIG. 13 (a), the exhaust gas, before passing through the diesel particulate filter 132, is supplied to the sensor 120 and the gas analyzer 134. Accordingly, the characteristics of the exhaust gas before passing through the diesel particulate filter 132 are detected by the sensor 120 and the gas analyzer 134, and the signal characteristics of the sensor 120 can be analyzed.

In FIG. 13 (b), the exhaust gas that passes through the diesel particulate filter 132 is supplied to the gas analyzer 134 and the sensor 120. Accordingly, the characteristics of the exhaust gas that passes through the diesel particulate filter 132 can be detected by the sensor 120 and the gas analyzer 134, and the signal characteristics of the sensor 120 can be analyzed.

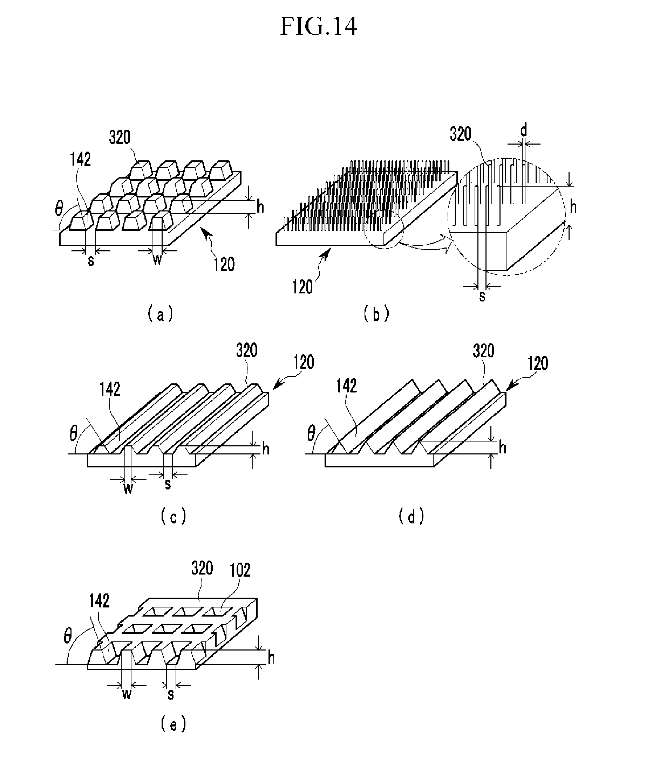

FIG. 14 is a perspective view showing various types of surfaces of a particulate sensor according to an exemplary embodiment of the present invention.

FIG. 14 (a) shows a pillar type of the electrode portions 320, and a slanted surface 142 is formed on a side surface of the pillar type electrode portions 320. The slanted surface 142 is formed such that the width of the electrode portions 320 becomes narrow in a front end side.

FIG. 14 (b) shows a sensor having a nanowire type of electrode portions 320, and the nanowire type of electrode portions 320 has a diameter (d) and a height (h), and a distance (s) is formed between them.

FIG. 14 (c) shows a sensor having a furrow type of electrode portion 320, and the furrow type of electrode portion has a slanted surface 142 on a side surface thereof. The section of the electrode portion 320 has a trapezoidal shape with the slanted surface 142.

FIG. 14(d) shows a sensor having a furrow type electrode portion 320, and a slanted surface 142 is formed on a side surface of the furrow type electrode portion 320. The section of the electrode portion 320 has a triangle shape with the slanted surface 142.

FIG. 14 (e) shows a sensor 120 of a pore type electrode portion 320, and a slanted surface 142 is formed on an interior surface of a pore type groove 102. The section of the groove 102 has a trapezoidal shape with the slanted surface 142.

Here, the diameter (d) of the nanowire type electrode portion 320 is shorter than 10 nm, which is a nanowire type. Also, a width (w) is 20 $\mu$m, a height (h) is longer than 20 $\mu$m, and a distance (s) can range from 20 to 120 $\mu$m. Further, the slant angle of the slanted surface 142 can be one value that is selected from area ranging from 50 to 60 degrees (preferably 54.7 degrees).

In an exemplary embodiment of the present invention, the sensor is disposed at a downstream side of the diesel particulate filter, the sensor generates a charge signal with the particulate that is exhausted from the diesel particulate filter, and a control portion analyzes the size and the frequency of the charge signal that are generated and determines whether the diesel particulate filter is damaged or not.

For convenience in explanation and accurate definition in the appended claims, the terms "upper", "lower", "inner" and "outer" are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. They are not intended to be exhaustive or to limit the invention to the precise forms disclosed, and obviously many modifications and variations are possible in light of the above teachings as well as various alternatives and modifications thereof. It is intended that the scope of the invention be defined by the Claims appended hereto and their equivalents.

**Claims**

1. A particulate sensor apparatus, comprising:

   an exhaust line through which exhaust gas flows; and
   a sensor that is disposed at one side in the exhaust line and generates electrical charges when a particulate passes near vicinity of the sensor,
   wherein an electrode portion is formed on a front surface of the sensor facing the particulate.

2. The particulate sensor apparatus of claim 1, wherein a groove is formed between electrode portions in a direction that crosses a direction that the exhaust gas flows.

3. The particulate sensor apparatus of claim 2, wherein the electrode portions are formed perpendicular to a direction that the exhaust gas flows.

4. The particulate sensor apparatus of claim 2, wherein a cross section of the electrode portion is in a rectangular shape.

5. The particulate sensor apparatus of claim 2, wherein a slanted surface is formed to a lateral side of the electrode portions from an upper end surface thereof to the groove.

6. The particulate sensor apparatus of claim 5, wherein the slanted surface forms an angle ranging from 50 to 60 degrees with respect to the upper end surface of the electrode portions.

7. The particulate sensor apparatus of claim 5, wherein

   - a cross section of the electrode portion is in a trapezoidal shape formed with the slanted surface, or
   - a cross section of the electrode portion is in a triangular shape formed with the slanted surface.

8. The particulate sensor apparatus of claim 1, wherein the electrode portion is in a pillar shape that protrudes at the front surface of the sensor in the pillar shape.

9. The particulate sensor apparatus of claim 8, wherein the electrode portion has a width of the electrode portion that is 20 nm, a distance from an adjacent electrode portion that ranges from 20 to 120 nm, and a height thereof that ranges from 20 nm to hundreds of nanometers.

10. The particulate sensor apparatus of claim 8, wherein a slanted surface is formed on lateral sides of the protrude portion to become wider from an upper end surface thereof to the front surface.

11. The particulate sensor apparatus of claim 9, wherein a cross-section of the electrode portion

    - has a trapezoidal shape, or
    - is in a triangular shape.

12. The particulate sensor apparatus of claim 1, wherein the electrode portion protrudes in the pillar shape, and an exterior diameter thereof is less than 10 nm to be a nano-wire shape.

13. The particulate sensor apparatus of claim 1, wherein the electrode portion is formed with pores that are sunken in a pillar shape.

14. The particulate sensor apparatus of claim 13, wherein the pores have

    - a cuboidal shape, or
    - a trapezoidal shape to become narrower from an upper surface thereof to a lower surface thereof.

15. The particulate sensor apparatus of claim 1, wherein a diesel particulate filter (DPF) is disposed at an upstream side of the sensor, the sensor generates the electrical charge that is induced by the particulate included in the exhaust gas, and a control portion determines whether the diesel particulate filter is damaged or not depending on the electrical charge of the sensor.

FIG.1

FIG.2

# FIG.3

# FIG.4

FIG.5

FIG.6

FIG.7

FIG.8

FIG.9

# FIG.10

(a)

(b)

(c)

# FIG.11

( a )

( b )

( c )

FIG.12

FIG.13

( a )

( b )

# FIG.14

( a )

( b )

( c )

( d )

( e )

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120119183